# EUROPEAN PATENT SPECIFICATION

(11) **EP 0 719 621 B1**
(45) Date of publication and mention of the grant of the patent: **16.08.2001**
(21) Application number: 95120131.8
(22) Date of filing: 20.12.1995
(51) Int. Cl.: B27K 5/02, C09D 15/00

(54) **Dyeing of sheets of wood by dyes belonging to the "vat" class**
Färben von Holzfurnieren mit Küpenfarbstoffen
Peinture des feuilles du bois avec des colorants appartenant aux colorants de cuve

(30) Priority: 28.12.1994 IT MI942670
(43) Date of publication of application: 03.07.1996
(73) Proprietor: ALPI S.p.A., 47015 Modigliana (Forli) (IT)
(72) Inventor: Selli, Serlio, I-47100 Forli' (IT); Farina, Lorenza, I-47015 Modigliana, Forli' (IT); Liverani, Italo, I-47015 Modigliana, Forli' (IT)
(74) Representative: Petruzzelli, Antonio European Patent Attorney

(56) References cited:
- EP-A- 0 055 694
- WO-A-94/06961
- FR-A- 2 332 361
- CHEMICAL ABSTRACTS, vol. 95, no. 10, 7 September 1981 Columbus, Ohio, US; abstract no. 82670, DANTANI PLYWOOD CO., LTD., JAPAN: "Dyeing of wood" XP002000638 & JP-A-56 056 810 (DANTANI PLYWOOD CO., LTD., JAPAN)
- PATENT ABSTRACTS OF JAPAN vol. 014, no. 395 (M-1016), 27 August 1990 & JP-A-02 150305 (MATSUSHITA ELECTRIC WORKS LTD), 8 June 1990,

## Description

The present invention relates to dyeing of a wood material in the form of sheets of wood intended for the production of veneering, wood panels, a multilaminar wood product and others. Dyeing refers in particular here to the obtaining of even colouring throughout the thickness of the wood material.

The dyeing method according to the present invention can be applied to sheets of wood of various wood types, both coniferous and broad-leaved, such as for example poplar, beech, oak, pine, fir, ash, birch, cherry, Nigerian Whitewood, "koto", "ilomba" (Pycanthus kombo) etc., which can be used for veneering or for preparing multilaminar wood or forforming wood-based panels.

For dyeing wood use has hitherto been made of dyes belonging to classes defined as acid dyes, basic dyes and direct dyes where the chromophorous molecules penetrate into the fibres of the wood, providing it with the appropriate colour effect, but without binding to the fibres themselves except via "weak" bonds (e.g. Van der Waals bonds).

The traditional dyeing system referred above causes low light fastness to be obtained due to phenomena of photodegradation under exposure to light, phenomena which vary according to the tone, dye and substrate.

The colour change of dyed woods exposed to the light is due mainly to the formation of free radicals generated by the photolysis of some chemical bonds both in the molecules of the wood (lignin, cellulose, hernicellulose etc.) and in those of the dyes, particularly if small in size, as are those mentioned above normally. The action of light oxidation caused by the radicals is also accelerated by various factors such as atmospheric oxygen and humidity.

In JP-A-56 056 810 a process for dyeing wood using vat dye solutions under pressure is described.

The general object of the present invention is that of obtaining a dyed wood with high fastness to light.

This object is achieved thanks to dyeing of sheets of wood by a method comprising the phases hereinbelow indicated in the independent claim 1.

Present invention concern also a dyed sheet of wood obtained with the above cited method of dyeing wood by using a dye chosen in the "vat dye" class.

By dyes belonging to the class of vat dyes we refer to those indicated under the item "Vat Dyes" of the Color Index published by the American Society of Dyers and Colourists, such as for example Indanthren from BASF, Cibanone from Ciba Geigy, Sandotrene from Sandoz and others.

The wood sheets dyed with vat dyes and the materials which can be obtained therefrom have brilliant colours which are also very fast to light.

All vat dyes are normally insoluble in water, but can be dissolved in a form defined as "leuco" by reduction of some functional groups such as for example the ketone groups.

To perform dyeing the fibre is immersed in the solution containing the leuco form of the dye, stabilised if necessary, and, when it has diffused, the dye is restored by oxidation of the leuco form absorbed by the fibre.

The dyes belonging to the vat class normally consist of large molecules with intrinsic features of resistance to attacks by radicals.

The present invention will in any case be made clearer on reading the following with reference to the accompanying drawings, in which:
Figure 1 represents a block diagram schematising particular embodiments of the method for obtaining dyed sheets of the present invention;
Figure 2 is a diagram illustrating an example of a method for manufacturing a wood product such as multilaminar wood comprising, as intermediate processing phase, the method of dyeing sheets of wood which forms the main object of the present invention;
Figure 3 is a graphic representation of the effect obtained on the surface of a sample of material coloured with a vat dye according to the present invention, after which it was subjected to a controlled test of exposure to light (Xenotest);
Figure 4 is a graphic representation of the effect obtained on the surface of a comparison sample coloured with a traditional acid dye after the latter has been subjected to a test similar to the one performed for the sample of Figure 3.

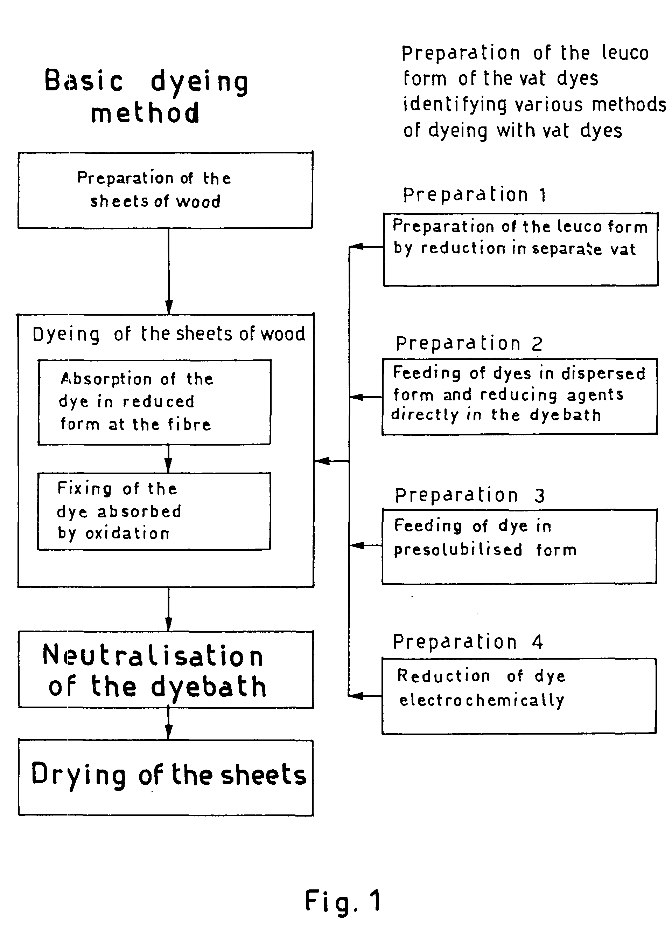

According to a first preferred embodiment of the dyeing method of the invention, the sheets, if necessary purged of chromophorous impurities and otherwise, are placed in a dyebath containing at least one vat dye previously reduced into a soluble form (leuco) (see preparation 1 of Fig. 1), together with a certain amount of agents for reducing and correcting the pH level, suitable for preventing oxidation of the dyes themselves during the process of impregnation of the wood.

The quantity of reducing agents is to be determined on each occasion in such a way that said quantity is sufficient for neutralising the oxidating effect of the oxygen present both in the air above the dyebath and in the solvent, and such as to neutralise the oxidating effect of the wood being dyed.

The constant control on the state of reduction and of the pH of the dyebath, with possible restoration of the appropriate conditions, allows the solubilised dye molecules to penetrate as far as the deepest layers of the sheet.

According to the working temperature, it is at times advantageous to use substances to stabilise the reducing environment, already known forthe textile process, such as for example glucose and sodium nitrite.

Penetration of the vat dye into the wood fibre is facilitated by adding various substances.

These substances that facilitate or improve the penetration of vat dye are surface-active agents, such as a wetting surfactant agent. These substances facilitating penetration of the vat dye can also be electrolytes (NaCl, Na2SO4 etc.).

Moreover into the dye bat are also added impregnating agents.

The time and temperature required for dyeing with the dye in reduced form will depend on the type and thickness of the wood used; purely by way of an example, purged broad-leaved sheets with a thickness smaller than 1 mm require times varying from 30 minutes to 12 hours, with temperatures of between 60° and 110°C.

According to the invention hydrosulphite is normally chosen as a reducing substance, even if other substances can be used such as for example bisulphite with sodium borohydride.

After the phase of absorption of the dye in leuco form, the phase of fixing of the same by oxidation is performed.

Having discharged the dyebath, said oxidation process is performed by the formation of a bath containing substances such as for example hydrogen peroxide, hypochlorite or gaseous oxygen at a temperature of between 40° and 105° for a time sufficient for restoring the insoluble form of the dye (30 minutes - 2 hours).

According to a further embodiment, which however has a considerably longer duration, said oxidation process can also be carried out by exposure to air.

There then follows a phase of neutralisation of the dyebath to restore the pH to values compatible with the chemical nature of the wood, using for example acetic acid, propionic acid and others, if necessary with impregnating substances added, such as for example ethylene glycol, glycerol or others.

Finally the dyed and stabilised sheets are dried in a wholly traditional manner.

A second preferred embodiment of the method of the present invention (cf. preparation 2 of Fig. 1) foresees preparation of the reduced form of the dye, belonging to the vat class, directly in the dyebath, by adding a suitable quantity of reducing agents at controlled pH (normally alkaline).

According to a third preferred embodiment, given as an example in point 3 of Figure 1, the use of vat dyes known as "solubilised" is foreseen, in other words those in which the soluble leuco form is prepared and stabilised in a period of time prior to and independent of dyeing.

A fourth preferred embodiment finally foresees the reduction of the dye to the soluble form electrochemically, and also possible maintaining of this state in the dyebath itself, again via this method (cf. preparation 4 of Figure 1).

Purely by way of a non-limiting example of the concept claimed, we shall now give hereinunder some examples of accomplishment of the method for dyeing sheets of wood of the present invention.

For the sheets produced in this way the result of a comparative test with similar sheets dyed traditionally is also provided, both subjected to exposure to the light rays from a xenon lamp by means of the Xenotest 150S (Heraeus) equipment.

### Example 1:

Broad-leaved wood (Nigerian Whitewood) processed into sheets with a thickness of 0.60 mm is purged at 100°C in a bath containing 66 cc/l of 35% hydrogen peroxide, 4 g/l of sodium silicate with pH 10 through sodium hydroxide until the undesirable substances are eliminated.

Separately, according to the preferred procedure no. 1, the leuco form of the colour combination required is prepared by dissolving a sufficient quantity of dye for obtaining a concentration in the dyebath of 1 g/l of Vat Yellow 2 (NGC Sandotrene Yellow from Sandoz), Vat Blue 66 (Clf Indanthren Blue from BASF) and Vat Red 13 (6BMD Cibanone Red from Ciba Geigy) in a volume of water equal to a sixth of the dyebath itself (preparation of the vat) with a mixture of sodium bisulphite plus sodium borohydride with pH 13.5 through caustic soda until the litmus paper for vat dyes (Vat Yellow 2) changes colour.

Dyeing is then performed by immersing the purged wood in a bath containing the dye, previously prepared in the leuco form in the manner described above, with pH 13 through NaOH with 8 g/l of wetting surfactant agent (Primasol NF from BASF) added, constantly checking (every 30 minutes) the state of reduction of the bath by appropriate litmus paper and if necessary restoring the suitable dyeing conditions by sodium hydrosulphite and NaOH.

After 8 hours of dyeing at 80°C the bath is discharged and the dyes are oxidated by adding 33 cc/l of 35% hydrogen peroxide for 1 hour at 95°C.

The wood is finally stabilised by neutralising the fibre via acid treatment with acetic acid, with 2 g/l polyethylene glycol added, at 95°C for one hour.

### Example 2

Broad-leaved wood (poplar) processed into sheets with a thickness of 0.75 mm is dyed using 2 g/l of Vat Red 13 (6BMD Cibanone Red from Ciba Geigy) reduced to the leuco form and maintained in this form by electrolytic reduction in an ionic environment through sodium chloride at 99°C for 6 hours.

Having discharged the bath the dyes are oxidated by exposing the individual sheets to the air for a time sufficiently long for regenerating the original colour.

### Comparative test:

In order to check on the increased fastness to light of the material obtained in this way, other sheets of poplar and Nigerian Whitewood were dyed by dyeing with acid pH through acetic acid with 1 g/l of Acid Yellow 17 (2G Lissamina Yellow from ICI), 1 g/l Add Red 66 (Suprammina Red B from Bayer) and 1 g/l of Acid Blue 40 (E-2GL Sandolan Blue from Sandoz), obtaining a colour similar to the one in question.

The sheets dyed in the two ways described above are dried according to known procedures, for example in a hot air tunnel.

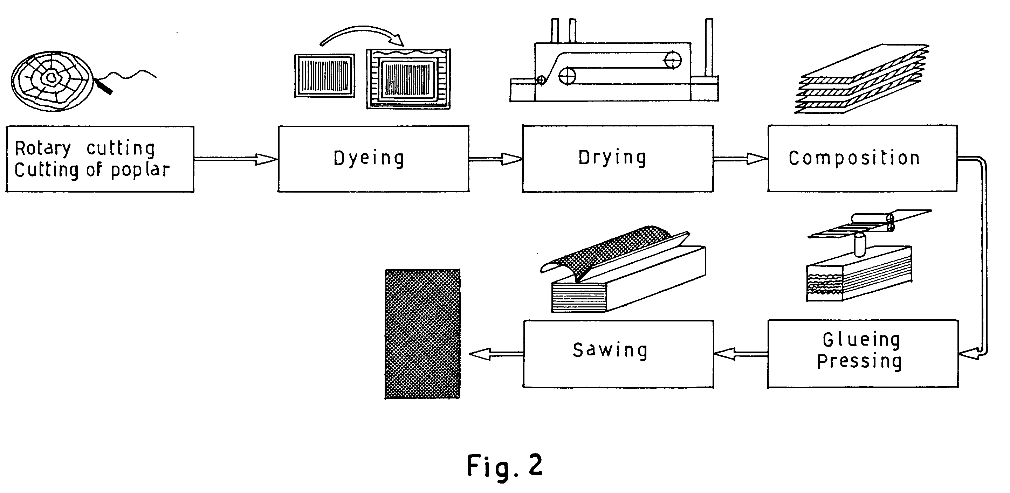

Part of them are used for decorating a plywood panel while the remaining ones are used for preparing a section of multilaminar wood (according to the illustrative diagram of Fig. 2) obtaining in both cases a pleasing appearance.

Evaluation of the increase in fastness to light was performed on both the natural material and on various simulations of "finished product" or covered with polymeric films such as those in polyester, polyurethane, acrylic etc., according to the method indicated in UNI 9427 for furniture surfaces, expressing the results on the basis of the blue scale where 1 corresponds to very weak light fastness and 8 very high light fastness.

The change in colour over time was evaluated by comparing the exposed part and the unexposed part of the specimen, comparing it to the similar situation on the blue scale.

| Blue scale evaluation | Natural | Covered |
|---|---|---|
| Sample dyed with vat dyes | 5 | 6 |
| Comparison sample dyed with acid dyes | 1 | 2 |

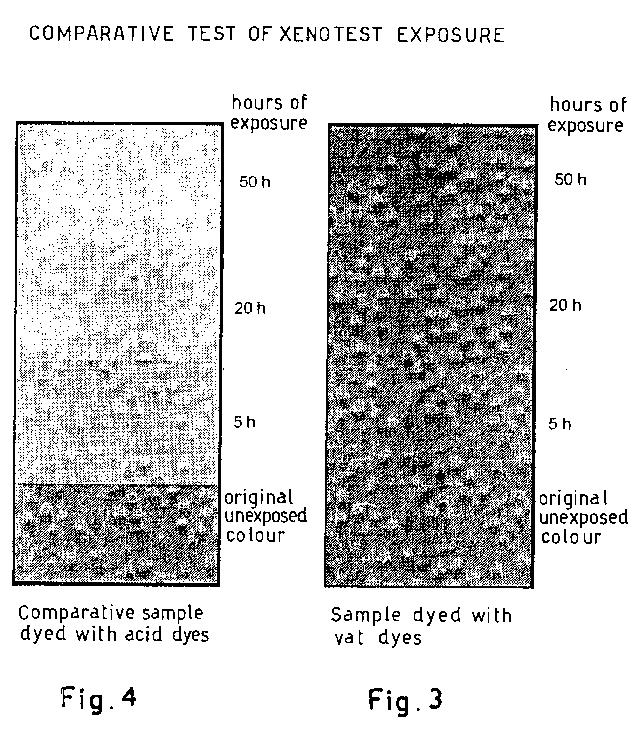

In order to represent better the advantageous effect of fastness to light of the wood dyed using vat dyes according to the present invention compared to woods dyed in a traditional way, examples are given in Figures 3 and 4 respectively of the effect produced by performing a controlled test of exposure to light (Xenotest) on a sample of material dyed with a vat dye according to the present invention and on a comparison sample dyed with a traditional acid dye.

In particular it can be seen that said samples both have in the lower zone a sector which has not been exposed to the light during the test of accelerated ageing with the Xenotest equipment described previously. Above, bands can be identified as corresponding to exposures equal to five, twenty and fifty hours respectively.

From the visual comparison of the two samples it is possible to perceive immediately how the sample dyed in the traditional manner already shows after five hours a marked variation up to complete degradation of the original colour when exposure to the light is extended up to twenty hours or more.

On the contrary the sample of wood dyed according to the present invention with a dye belonging to the vat class does not show any substantial loss of colour even after exposure of over fifty hours.

## Claims

1. A method for dyeing wood in sheets comprising
- immersing the wood sheets into a vat containing a dye bath, which dye bath comprises at least one vat dye in a water soluble leuco form and at least a substance selected from surface active agents, electrolytes and impregnating agents, for increasing the penetration of the vat dye into the wood fibres;
- performing the dyeing under atmospheric pressure while periodically controlling the alkaline pH of the dye bath such as to guarantee optimum stabilisation of the leuco form of the solubilised vat dye;
- discharging the dye bath and oxidising the vat dye absorbed in the wood sheets in order to restore the vat dye to the insoluble stable form;
- neutralizing the dyed wood sheets;
- drying the wood sheets.

2. A method for dyeing wood in sheets according to claim 1, characterised in that said surface-active agent is a wetting surfactant agent.

3. A method for dyeing wood in sheets according to any of previous claims, characterised in that oxidation of the leuco form of the vat dye absorbed at the wood fibre in order to restore the dye to the insoluble stable form is performed at atmospheric pressure.

4. A method for dyeing wood in sheets according to any of previous claims, characterised in that the absorption of the vat dye in soluble leuco form in the wood fibre is performed at a temperature comprised between 60 and 110° C

5. A method for dyeing wood in sheets according to any of previous claims, characterised in that the absorption of the vat dye in soluble leuco form in the wood fibre is performed for the time necessary to perform a even coloring throughout the thickness of the wood sheet.

6. A method for dyeing wood in sheets according to any of previous claims, characterised in that a quantity of reducing agent is added to the dye bath required for neutralising the oxidating effect of the oxygen contained in the air above the bath and in the solvent, and such as to neutralise the oxidating effect of the wood being dyed.

7. A method for dyeing wood in sheets according to any of the previous claims, characterised in that a constant control is performed on the state of reduction of the dye bath and the required reducing agent is added to ensure this state of reduction throughout the process.

8. A method for the dyeing of wood in sheets according to any of previous claims, characterised in that said oxidation process is performed by adding an oxidating substance.

9. A method for the dyeing of wood in sheets according to previous claim, characterised in that the oxidating substance is chosen preferably, from among hydrogen peroxide, sodium hypochlorite and gaseous oxygen.

10. A method for dyeing wood in sheets according to any of previous claims 1 to 7, characterised in that said oxidation process is performed

11. A method for dyeing wood in sheets according to the previous claim, characterised in that during the neutralisation phase a substance, such as acetic acid or propionic acid, is preferably used, if necessary with the addition of at least an impregnating substance.

12. A method for dyeing wood in sheets according to claim 11, characterized in that the impregnating sustance is chosen between ethylene glycol, polyethylene glycol and glycerol.

13. A method for dyeing wood in sheets according to any of previous claims, characterised in that it comprises a phase of reduction to the leuco form of the vat dye in a phase prior to dyeing itself by treatment of the dye dispersed in water with reducing substances at pH values such that the reduced form of the dye itself is stabilised.

14. A method for dyeing wood in sheets according to any of previous claims, characterised in that said vat dye is added to the dye bath in a presolubilised reduced form.

15. A method for dyeing wood in sheets according to any of previous claims 1 to 13, characterised in that it comprises the phase of reduction of the vat dye to the solubilised form directly in the dye bath by means of appropriate additions of reducing agents at pH values such that the reduced form of the dye itself is stabilised.

16. A method for dyeing wood in sheets according to any of previous claims, characterised in that said the reducing substance is chosen between sodium hydrosulphite and sodium bisulphite with added sodium borohydride.

17. A method for dyeing wood in sheets according to any of previous claims, characterised in that the vat dye is reduced in the leuco form and maintained in this form by exploiting electrolytic reduction processes.

## Patentansprüche

1. Eine Methode zum Färben von Holzfurnieren, die folgendes umfaßt:
- das Eintauchen der Holzfurniere in eine Küpe, die ein Farbbad enthält, welches mindestens einen Küpenfarbstoff in einer wasserlöslichen Leukoform und mindestens eine Substanz umfaßt, die aus oberflächenaktiven Mitteln, Elektrolyten und Imprägnierungsmitteln ausgewählt wird, um das Eindringen des Küpenfarbstoffs in die Holzfasern zu verstärken;
- die Durchführung der Färbung unter Atmosphärendruck, während der alkalische pH-Wert des Farbbads regelmäßig überprüft wird, um eine optimale Stabilisierung der Leukoform des aufgelösten Küpenfarbstoffs zu garantieren;
- das Ablassen des Farbbads und Oxydieren des in die Holzfurniere eingezogenen Küpenfarbstoffs, um den Küpenfarbstoff wieder in eine stabile, unlösliche Form zu bringen;
- die Neutralisation der gefärbten Holzfurniere;
- das Trocknen der Holzfurniere.

2. Eine Methode zum Färben von Holzfurnieren gemäß Anspruch 1,
dadurch gekennzeichnet, daß das genannte oberflächenaktive Mittel ein benetzender, oberflächenaktiver Stoff ist.

3. Eine Methode zum Färben von Holzfurnieren gemäß einem beliebigen der vorausgegangenen Ansprüche, dadurch gekennzeichnet, daß die Oxydation der Leukoform des in die Holzfaser eingedrungenen Küpenfarbstoffs, mit dem Ziel, die Farbe in ihre unlösliche, stabile Form zurückzuversetzen, unter Atmosphärendruck erfolgt.

4. Eine Methode zum Färben von Holzfurnieren gemäß einem beliebigen der vorausgegangenen Ansprüche, dadurch gekennzeichnet, daß das Eindringen des Küpenfarbstoffs in löslicher Leukoform bei einer Temperatur erfolgt, die zwischen 60 und 110°C liegt.

5. Eine Methode zum Färben von Holzfurnieren gemäß einem beliebigen der vorausgegangenen Ansprüche, dadurch gekennzeichnet, daß das Eindringen des Küpenfarbstoffs in löslicher Leukoform in die Holzfaser in der Zeit erfolgt, die notwendig ist, um eine gleichmäßige Färbung der gesamten Stärke des Holzfurniers zu erzielen.

6. Eine Methode zum Färben von Holzfurnieren gemäß einem beliebigen der vorausgegangenen Ansprüche, dadurch gekennzeichnet, daß dem Farbbad eine Menge von Reduktionsmitteln hinzugefügt wird, die für die Neutralisation der Oxydationswirkung des Sauerstoffs benötigt wird, der in der Luft über dem Bad und in dem Lösemittel enthalten ist, und um die Oxydationswirkung des in der Färbung begriffenen Holzes zu neutralisieren.

7. Eine Methode zum Färben von Holzfurnieren gemäß einem beliebigen der vorausgegangenen Ansprüche, dadurch gekennzeichnet, daß eine ständige Kontrolle in Bezug auf den Reduktionszustand des Farbbads durchgeführt wird und das erforderliche Reduktionsmittel hinzugegeben wird, damit dieser Reduktionszustand über das gesamte Verfahren hindurch gewährleistet ist.

8. Eine Methode zum Färben von Holzfurnieren gemäß einem beliebigen der vorausgegangenen Ansprüche, dadurch gekennzeichnet, daß das genannte Oxydationsverfahren durch Zugabe eines Oxydationsmittels erfolgt.

9. Eine Methode zum Färben von Holzfurnieren gemäß dem vorausgegangenen Anspruch, dadurch gekennzeichnet, daß das Oxydationsmittel vorzugsweise unter Wasserstoffperoxyd, Natrium-Hypochlorit und gasförmigem Sauerstoff ausgewählt wird.

10. Eine Methode zum Färben von Holzfurnieren gemäß einem beliebigen der vorausgegangenen Ansprüche von 1 bis 7, dadurch gekennzeichnet, daß das genannte Oxydationsverfahren dadurch erfolgt, daß es der Luft ausgesetzt wird.

11. Eine Methode zum Färben von Holzfurnieren gemäß einem beliebigen der vorausgegangenen Ansprüche, dadurch gekennzeichnet, daß während der Neutralisationsphase vorzugsweise ein Stoff, wie beispielsweise Essigsäure oder Propionsäure, bei Bedarf bei Zugabe von mindestens einem Imprägnierungsmittel, verwendet wird.

12. Eine Methode zum Färben von Holzfurnieren gemäß Anspruch 11, dadurch gekennzeichnet, daß das Imprägnierungsmittel unter Äthylenglykol, Polyäthylenglykol und Glycerin ausgewählt wird.

13. Eine Methode zum Färben von Holzfurnieren gemäß einem beliebigen der vorausgegangenen Ansprüche, dadurch gekennzeichnet, daß sie in einer der Färbung selbst vorausgehenden Phase eine Phase der Reduzierung des Küpenfarbstoffs auf die Leukoform umfaßt, und zwar durch die Aufbereitung der in Wasser dispergierten Farbe, welches Reduktionsmittel mit solchen pH-Werten enthält, daß die reduzierte Form der Farbe selbst stabilisiert wird.

14. Eine Methode zum Färben von Holzfurnieren gemäß einem beliebigen der vorausgegangenen Ansprüche, dadurch gekennzeichnet, daß der genannte Küpenfarbstoff dem Farbbad in einer vorgelösten, reduzierten Form beigegeben wird.

15. Eine Methode zum Färben von Holzfurnieren gemäß einem beliebigen der vorausgegangenen Ansprüche von 1 bis 13, dadurch gekennzeichnet, daß sie eine Phase der Reduzierung des Küpenfarbstoffs auf die gelöste Form direkt im Farbbad umfaßt, und zwar durch entsprechende Zugaben von Reduktionsmitteln mit solchen pH-Werten, daß die reduzierte Form der Farbe selbst stabilisiert wird.

16. Eine Methode zum Färben von Holzfurnieren gemäß einem beliebigen der vorausgegangenen Ansprüche, dadurch gegenzeichnet, daß das Reduktionsmittel unter Natriumhydrosulfit und Natrium Bisulfit bei Zugabe von Natrium-Bohrhydrid ausgewählt wird.

17. Eine Methode zum Färben von Holzfurnieren gemäß einem beliebigen der vorausgegangenen Ansprüche, dadurch gekennzeichnet, daß der Küpenfarbstoff auf Leukoform reduziert und in dieser Form durch Nutzung von elektrolytischen Reduktionsverfahren beibehalten wird.

## Revendications

1. Une méthode pour la peinture du bois en feuilles comprenant
- l'immersion des feuilles de bois dans une cuve contenant un bain colorant, ledit bain colorant comprenant au moins un colorant de cuve sous une leucoforme soluble dans l'eau et au moins une substance choisie parmi les agents actifs de surface, les électrolytes et les agents imprégnants, pour accroître la pénétration du colorant de cuve dans les fibres du bois ;
- exécution de la peinture à la pression atmosphérique tout en contrôlant périodiquement le pH alcalin du bain colorant de manière à garantir la stabilisation optimale de la leucoforme du colorant de cuve solubilisé ;
- rongeage du bain colorant et oxydation du colorant de cuve absorbé dans les feuilles de bois afin de rétablir le colorant de cuve à sa forme stable insoluble ;
- neutralisation des feuilles de bois colorées ;
- séchage des feuilles de bois.

2. Une méthode pour la peinture du bois en feuilles conformément à la revendication 1, caractérisée par le fait que ledit agent actif de surface est un agent de surface humidifiant.

3. Une méthode pour la peinture du bois en feuilles conformément à n'importe laquelle des revendications précédentes, caractérisée par le fait que l'oxydation de la leucoforme du colorant de cuve absorbé par la fibre de bois afin de rétablir le colorant de cuve à sa forme stable insoluble est réalisée à la pression atmosphérique.

4. Une méthode pour la peinture du bois en feuilles conformément à n'importe laquelle des revendications précédentes, caractérisée par le fait que l'absorption du colorant de cuve sous une leucoforme soluble par la fibre du bois est réalisée à une température comprise entre 60 et 110 °C.

5. Une méthode pour la peinture du bois en feuilles conformément à n'importe laquelle des revendications précédentes, caractérisée par le fait que l'absorption du colorant de cuve sous une leucoforme soluble par la fibre du bois est réalisée pendant le délai nécessaire à réaliser une coloration uniforme à travers l'épaisseur de la feuille de bois.

6. Une méthode pour la peinture du bois en feuilles conformément à n'importe laquelle des revendications précédentes, caractérisée par le fait qu'une quantité d'agent de réduction est additionnée au bain colorant requis pour neutraliser l'effet oxydant de l'oxygène contenu dans l'air au-dessus du bain et dans le solvant, et de manière à neutraliser l'effet oxydant du bois qui va être coloré.

7. Une méthode pour la peinture du bois en feuilles conformément à n'importe laquelle des revendications précédentes, caractérisée par le fait qu'un contrôle constant est exécuté sur l'état de réduction du bain colorant et que l'agent de réduction requis est ajouté pour assurer cet état de réduction durant tout le processus.

8. Une méthode pour la peinture du bois en feuilles conformément à n'importe laquelle des revendications précédentes, caractérisée par le fait que ledit processus d'oxydation est réalisé en ajoutant une substance oxydante.

9. Une méthode pour la peinture du bois en feuilles conformément à la revendication précédente, caractérisée par le fait que la substance oxydante est choisie de préférence parmi le peroxyde d'hydrogène, l'hypochlorite de sodium et l'oxygène gazeux.

10. Une méthode pour la peinture du bois en feuilles conformément à n'importe laquelle des revendications précédentes de 1 à 7, caractérisée par le fait que ledit processus d'oxydation est réalisé par exposition à l'air.

11. Une méthode pour la peinture du bois en feuilles conformément à la revendication précédente, caractérisée par le fait que durant la phase de neutralisation une substance, telle l'acide acétique ou l'acide propionique, est employée de préférence, si nécessaire avec l'adjonction d'au moins une substance imprégnante.

12. Une méthode pour la peinture du bois en feuilles conformément à la revendication 11, caractérisée par le fait que la substance imprégnante est choisie entre l'éthylène glycol, le polyéthylène glycol et le glycérol.

13. Une méthode pour la peinture du bois en feuilles conformément à n'importe laquelle des revendications précédentes, caractérisée par le fait qu'elle comprend une phase de réduction à la leucoforme du colorant de cuve dans une phase précédente à cette même coloration par traitement du colorant dispersé dans l'eau avec des substances de réduction ayant des valeurs de pH telles que la forme réduite du colorant lui-même est stabilisée.

14. Une méthode pour la peinture du bois en feuilles conformément à n'importe laquelle des revendications précédentes, caractérisée par le fait que le colorant de cuve est ajouté au bain colorant sous une forme réduite présolubilisée.

15. Une méthode pour la peinture du bois en feuilles conformément à n'importe laquelle des revendications précédentes de 1 à 13, caractérisée par le fait qu'elle comprend la phase de réduction du colorant de cuve sous la forme solubilisée directement dans le bain colorant au moyen d'adjonctions appropriées d'agents de réduction à des valeurs de pH telles que la forme réduite du colorant même est stabilisée.

16. Une méthode pour la peinture du bois en feuilles conformément à n'importe laquelle des revendications précédentes, caractérisée par le fait que ladite substance de réduction est choisie entre l'hydrosulfite de sodium et le bisulfite de sodium avec l'adjonction de borohydrure de sodium.

17. Une méthode pour la peinture du bois en feuilles conformément à n'importe laquelle des revendications précédentes, caractérisée par le fait que le colorant de cuve est réduit sous la leucoforme et maintenu sous cette forme en exploitant les processus de réduction électrolytique.
